# EUROPEAN PATENT SPECIFICATION

(11) **EP 0 303 258 B1**
(45) Date of publication and mention of the grant of the patent: **12.05.1993**
(21) Application number: 88113017.3
(22) Date of filing: 10.08.1988
(51) Int. Cl.: B05D 5/06, B05D 7/14

(54) **Coating of metallic substrates with liquid crystal polymers**
Beschichten von Metallsubstraten mit Flüssigkristallpolymeren
Revêtements de substrats métalliques avec des cristaux liquides polymères

(30) Priority: 14.08.1987 US 85351
(43) Date of publication of application: 15.02.1989
(73) Proprietor: Montedison S.p.A., I-20121 Milan (IT)
(72) Inventor: George, Eric R., Houston Texas (US)
(74) Representative: Weinhold, Peter, Dr.

(56) References cited:
- US-A- 3 382 295
- US-A- 4 564 669
- US-A- 4 668 760

## Description

### TECHNICAL FIELD

The present invention relates to coating metallic substrates with organic polymers; more particularly, it relates to coating metal articles with liquid crystal polymers, namely those which are optically anisotropic in the melt phase. Even yet more particularly, the present invention is directed to forming liquid crystal polymer coatings on metal substrates which coatings are substantially uniform and continuous.

### BACKGROUND OF THE ART

Metallic substrates of all types have been coated for many years with various organic polymers. Generally the purpose of these coatings is to provide the metallic substrate with enhanced properties, e.g. improved corrosion resistance. Depending on the environment in which the metal will be employed, numerous other properties can likewise become highly important. Such properties include for example, abrasion resistance, electrical resistance, impact resistance, temperature resistance, chemical inertness.

Somewhat recently, a wide variety of polyesters which are optically anisotropic in the melt phase (liquid crystal) have been receiving significant attention. These polyesters are typically substantially wholly aromatic polyesters. They have highly desirable properties making them of utility for a wide variety of applications. United States Patent No. 4,564,669 for example, discloses liquid crystal polymers and indicates that they may be used as covering and coating materials (in powder form or dispersed). Unfortunately, even in the case of liquid crystal polymers which have good corrosion resistance, or other desirable properties making them of interest for a specific coating application, these polymers frequently possess a problem of being incapable of conveniently forming continuous and uniform coatings on metallic substrates. In short, many are not well adapted for use in providing coatings on metallic substrates to enhance the surface properties of the metal, for example, corrosion resistance. One of the more significant problems which arises is the inability to form coatings which are substantially free of craters and pinholes. Craters are aesthetically unappealing and pinholes expose the underlying substrate to the adverse environment against which it is intended to be protected.

### DISCLOSURE OF THE INVENTION

In accordance with the present invention metallic substrates are provided with a continuous and uniform protective coating of a prescribed wholly aromatic copolymer which is optically anisotropic in the melt phase. The process for forming such substrates comprises desirably, electrostatically coating a liquid crystal particulate copolymer onto a metallic substrate, wherein the copolymer includes the following moieties in the backbone 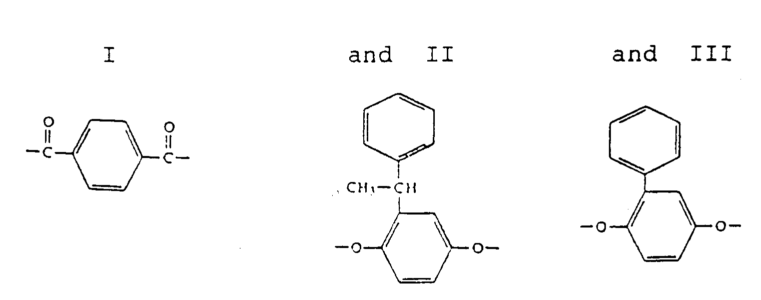
and heating said coated metal substrate for a time and at a temperature sufficient to form a substantially continuous and uniform protective coating on said substrate. The polymer desirably has a melt viscosity of between about ten (10) and about one-hundred (100) poise when measured at a shear rate between about three hundred (300) and about twenty thousand(20,000) (reciprocal seconds) in the temperature range of about 330°C to about 350°C. In a highly preferred embodiment of the invention, after the coated substrate is heated to allow the polymer to flow, the heated and coated substrate will be cooled by quenching. It has been observed that the quenching helps minimize the occurence of thermal stress cracking, especially with thicker coatings.

The above coatings are hard, heat resistant, corrosion resistant, especially exhibiting good corrosion resistance to salt water, weak acids and bases, various solvents including hydrocarbons e.g. aromatics like toluene, halohydrocarbons, especially chlorohydrocarbons, even at elevated temperatures. The coatings exhibit good adhesion to a wide variety of metallic substrates. Additionally, the coatings have the following other properties making them useful for a wide variety of applications. These properties include: outstanding abrasion resistance, electrical resistance and temperature resistance. Apparently because of the good adhesion, the coatings, quite unexpectedly, exhibit good impact resistance.

One specific application where the coatings of this invention will find great utility, is as a coating for both the ceramic and metal portions of positive, or zero, temperature coefficient thermistors. These coatings are especially well adapted for such an application because of their resistance to oxidation good high temperature resistance, and non-interaction with the substrate. Moreover the coatings do not change the electrical resistance profile of the thermistor.

### DESCRIPTION OF THE INVENTION INCLUDING THE BEST MODE FOR CARRYING IT OUT

The copolymers which produce the outstanding results of this invention include the three moieties indicated above. These copolymers can be produced by conventional polyesters condensation polymerization techniques, including for example, melt polymerization and solution polymerization. Transesterification or esterification techniques can be employed. The polymers can be formed from terephthalic acid, or its polyester forming derivatives, phenyl hydroquinone, or its polyester forming derivatives, and (1-phenylethyl) hydroquinone, or its polyesters forming derivatives.

Since the polymers are to be used in particulate form, it is preferred that the materials be polymerized by a solution polymerization process. In this way, the added expense required to grind and pulverize a melt polymerized material is avoided. Moreover, and somewhat unexpectedly, the solution polymerization technique tends to produce a spheroidally shaped particle with a desirable balance of relatively large and small size material, thereby allowing for good compaction of the particles and enhancing the quality of the final fused coating product. The copolymer materials are desirably formed by the solution polymerization techniques set forth in United States Patent No. 4,600,765 and Patent No. 4,668,760, both of which are hereby incorporated by reference with respect to the method of synthesis. Preferably, the polyesters are manufactured from terephthaloyl chloride, (1-phenylethyl) hydroquinone and phenylethylhydroquinone using pyridine and methylene chloride. If desired, the final copolymer, after being separated washed and dried, maybe subjected to a devolatilization (pre-annealing) to remove residual unreacted ingredients. The devolatilization is affected by simply heating the particulate material in an inert gas. United States Serial No. 819,945 exemplifies such processing.

The copolymers employed to produce the outstanding metallic substrates have very low melt viscosities. That is, they generally have melt viscosities of between about 10 to about 100 poise when measured at a shear rate of between about 300 to about 20,000 reciprocal seconds (sec -1) at a temperature range of about 330°C to about 350°C. Desirably, the polymers have melt viscosities of about 20 to about 50 poise in that temperature range and when measured at a shear rate of between about 380 to about 18,000 reciprocal seconds.

These copolymers have also been determined to have another property which is believed to be highly significant in producing substantially continuous and uniform coatings having only occasionally minimal, if any, craters and pinholes. That is these polymers are possessed of a low yield stress. Typically, these copolymers have a yield stress on the order of less than about 0.05 (0.345 kPa) and most typically a yield stress on the order of about 0.036 psi (0.248 kPa) (It will thus be appreciated that these yield stresses are negligible compared to the force of gravity and also insignificantly small when compared to many other polymers). The yield stress can be obtained from a plot of shear stress versus shear rate for the polymer (at 360°C) followed by extrapolation to 0 zero shear rate to enable the determination of the yield stress.

The mole ratio of moiety II to moiety III in highly suitable polymers will be between about 1:4 to about 2:1 with a molar ratio of 1:1 producing outstanding results. Typically these materials have a melting point of about 320°C. For best results, it is desirable to pass the particulate polymer prior to utilization through a 80 mesh sieve and even more desirably, using material that has been passed through a 120 mesh sieve. An 80 mesh sieve corresponds roughly to approximately 177 micron diameter material and less while a 120 mesh corresponds to approximately 125 micron material. A particularly suitable size distribution obtained by passing the synthesized polymer through a 120 mesh screen, shows approximately 28 to 30 percent by weight of the material with a particle size of less than about 92 microns, about 50 to 55 percent by weight of the material with a particle size range between about 92 to about 108 microns, and about 10 to 20 percent by weight of particulars in the range of about 108 to about 125 or 128 microns.

The following experiment illustrates that all liquid crystal polymers which are optically anisotropic in the melt phase are not equivalent and are not necessarily suitable as coatings for metals. Three different powders of liquid crystal polymers were placed on a steel platen. The powders included a polymer contemplated for use in accordance with the present invention (e.g. wherein moiety II to a moiety III was in a molar ratio of about 1:1). The material was not devolatilized, or pre-annealed, prior to utilization. The two other powders were commercially available materials one of which is believed to be a copolymer of bisphenol E, isophthalic acid, and 2,6 naphthalene dicarboxylic acid and the other is believed to be a blend of a homopolymer of about 80% by weight of para-hydroxy benzoic acid with about 20% by weight of polyethylene terephthalate. The powders were heated approximately 10° to 20°C above their respective melting points. All three melted, but only the liquid crystal polymer contemplated for the use in accordance with the present invention, flowed to form a substantially continuous and uniform film. The other two liquid crystal polymers did not form such a film but formed discontinuous fused particles, hence clearly indicating unsuitability for metal coating materials. This is believed to be the result of the fact that these other liquid crystal polymers exhibit yield stresses substantially above those indicated above and as possessed by the copolymer contemplated for use in the present invention.

Any solid metallic substrate can be provided with the protective coating in accordance with the present invention. These substrates can be of any shape, that is, they can be of a simple rectilinear configuration or of complex curvilinear configurations. Representative meals which are advantageously coated in accordance with the present invention can include: copper, silver, brass, iron and stainless steel. Preferred metals will generally have a resistivity of less than about 10¹⁰ ohm x cm. Any of the wide variety of carbon steels are especially advantageously coated to enhance many of their surface properties, especially corrosion resistance.

The particulate liquid crystal copolymer can be applied to the substrates using any of a wide variety of commercially available electrostatic spraying systems. Two systems which have been found to produce highly desirable results include the Model EIP-85-IME Electro-Ion electrostatic spraying system manufactured by Jensen Oven near Detroit, Michigan and also a Model CH 9015 (GEMA A6). Ransburg and DeVilbiss also supply acceptable systems. Preferably the substrate will be grounded and the electrostatic spray gun will be at a positive change during coating and the voltages and flow rates will be routinely adjusted by those skilled in the art. Obviously the voltage will be adjusted however, such that there is no air break down, or spark formation, during coating as such conditions will cause the formation of a highly inferior coating.

In order to obtain best results with regard to adhesive bonding, it is preferred to treat the metallic substrate prior to coating with the particulate liquid crystal polymer. In the preferred technique, the substrate will first be degreased by treatment with a strong organic solvent. The preferred solvent is methylethyl ketone. Following the degreasing, it is preferred to sandblast the surface to a surface profile of approximately one mill using 54 grit aluminium oxide. Finally, the substrate is pickled by immersion in a three weight percent ammonium cinnemate aqueous solution and then solvent rinsed with acetone. If in the application involved, all that is required is adhesion to satisfy the adhesion tape test (ASTM Test Method 03359 Method b) there will generally be no need to prepare the solution with the pickling step noted above. The pickling, however, is recommended for highly corrosive applications to provide tenacious adhesion.

The electrostatic spraying of the liquid crystal polymer will proceed for a sufficient period of time to form the desired thickness of powder. The deposited powder layer on the substrate is then heated for a sufficient period of time at a sufficiently elevated temperature to allow the polymer to flow out and form a substantially continuous uniform coating. These coatings generally are substantially free of pinholes and craters. For best results, it is preferred that electrostatic spraying be conducted for a sufficient period of time to form a powder thicknesses on the order of about 2 mils to about 30 mils. The higher thicknesses may require successive processing steps. Outstanding results have been obtained by heating particulate layers having a thickness in the order of about 0.003 inches (three mils) on a wide variety of surfaces, including rectilinear and curvilinear shapes, at a temperature of about 365°C for about two minutes. In fact a good reference point for thicknesses other than about three mils, is to heat the power for a time and at a temperature sufficient so that the final coating is at least as smooth as that obtained by heating a particulate coating having about a three mil thickness for about two minutes at 365°C. On sharp edges, when using particulate thicknesses on the order of about four mils, an increased tendency toward pinhole formation has been observed. Thus, the sharper the edges, the more advisable it is to employ a somewhat thicker coating. Additionally, occasionally crater formation has been observed in the final coating. Such crater formation has been determined to be at least occasionally caused by the presence of impurities in the polymer. Consequently, care should be exercised to prevent contamination of the copolymer at least in those instances where such crator formation would be unacceptable. It has also been determined that such crater formation frequently occurs by employing a heating step in which the intensity of the heating, (time and/or temperature) is too severe.

After heating the substrate with the particulate coating thereon for time sufficient to allow the coating to flow it has been found desirable to quench the coated heated substrate to thereby cool it at a relatively rapid rate as compared to simply allowing the substrate to gradually cool to room temperature by setting. The quenching can be effected by simply immersing the substrate in a suitable liquid such as for example, water. Other liquids which may be used include methanol, ethanol, liquid nitrogen, acetone and the like. Occasionally it has been observed that, without quenching, thermal stress cracking exists in the completed coated substrate. The quenching has been found to substantially minimize the likelihood of any stress cracks occurring. Additionally, it has also been observed that quenching appears to minimize the likelihood that craters will form and significantly minimizes potential degradation. This results in a smooth, uniform and continuous film essentially free of craters and pinholes, even at a three mil thickness.

Thus from the foregoing, it will be apparent that highly desirable liquid crystal polymer coatings can be formed on metallic substrates. These coatings are substantially continuous, resulting from good flowout. Because of this good flowout, these polymers, compared to other liquid polymers, form more uniform thicknesses. The coatings have excellent adhesion, good impact strength and good abrasion resistance. They have good chemical resistance, especially against the liquids previously noted as well as against oil and brake fluid making them well suited for a wide variety of protective coating applications. Substrates with these polymers are also available for high temperature applications because the liquid crystal polymers have good high temperature resistance.

## Claims

1. A process for providing a protective coating for metallic substrates comprising coating said substrate with a particulate copolymer which is optically anisotropic in the melt phase onto said substrate, said copolymer having the following moieties in the backbone 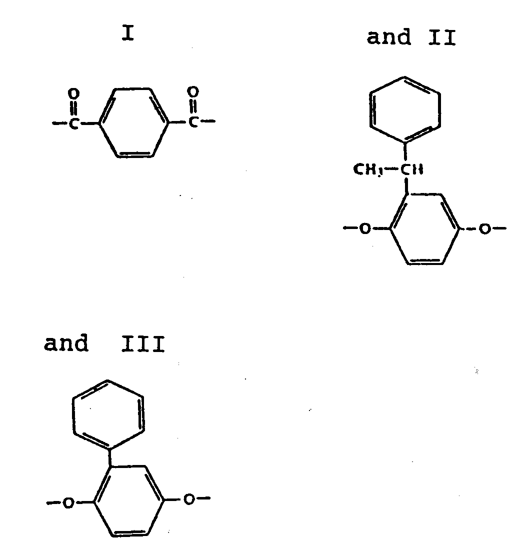 and heating said coated metal substrate for a time and at a temperature sufficient to form a substantially continuous and uniform hard, corrosion resistant, strongly adhered protective coating on said substrate.

2. The process of Claim 1 wherein upon completing said heating said heated coated substrate is cooled by quenching.

3. The process of Claim 2 wherein said quenching comprises immersing said heated coated substrate in water.

4. The process of one or more of the claims 1-3 wherein said coating comprises electrostatically coating.

5. The process of one or more of the claims 1-4 wherein said copolymer has a melt viscosity of between about 20 to about 50 poise at a shear rate of about 380 to about 18,000 reciprocal seconds and in the temperature range of about 330°C to about 350°C.

6. The process of one or more of the claims 1-5 wherein said protective coating is at least as smooth as that obtained by heating said particulate copolymer when at a thickness of about .003 inches at a temperature of about 365°C for about two minutes and wherein said particulate material is smaller than 120 mesh.

7. The process of one or more of the claims 1-6 wherein said copolymer has a yield stress of less than about 0.05 psi (0.345 kPa), e.g. of about 0.036 psi (0.248 kPa).

8. The process of one or more of the claims 1-7 wherein said copolymer contains moiety II and III in the approximate molar ratio of between about 1:4 to about 2:1, preferably of about 1:1.

9. The process of claim 1 for providing a continuous, uniform protective coating on a metallic substrate comprising coating said substrate with a particulate liquid crystal polymer which has a melt viscosity of between about 10 to about 100 poise when measured at a shear rate of between about 300 to about 20,000 reciprocal seconds in the temperature range of about 330°C. to about 350°C., and heating said coated substrate for a time and at a temperature sufficient to form a strongly adhered, substantially continuous and uniform, hard, corrosion resistant coating.

10. A metal substrate produced by a process according to one or more of the claims 1-9 having a substantially uniform and continuous hard, abrasion resistant, corrosion resistant coating thereon, said coating being formed of a copolymer which is optically anisotropic in the melt phase and having the following moieties in the backbone

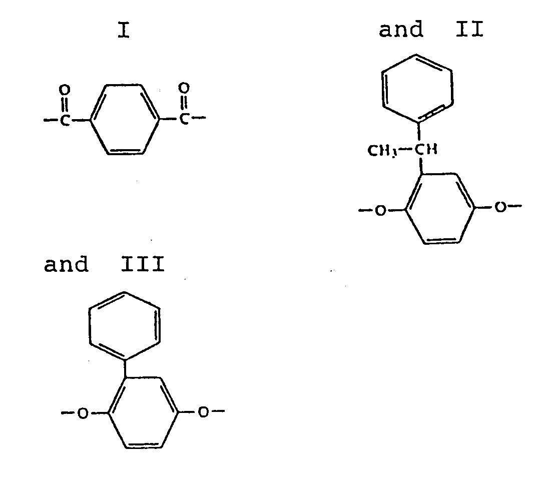

11. The coated substrate of one or more of the claims 1-10 wherein said copolymer has a melt viscosity of between about 10 to about 60 poise when at a temperature of about 330°C to about 350°C and at a shear rate of about 300 to about 20,000 reciprocal seconds.

## Patentansprüche

1. Verfahren zur Bildung einer Schutzbeschichtung auf Metallsubstraten, das das Beschichten des Substrates mit einem feinteiligen Copolymer, das in der Schmelzphase optisch anisotrop ist und das die folgenden Einheiten in der Hauptkette hat: 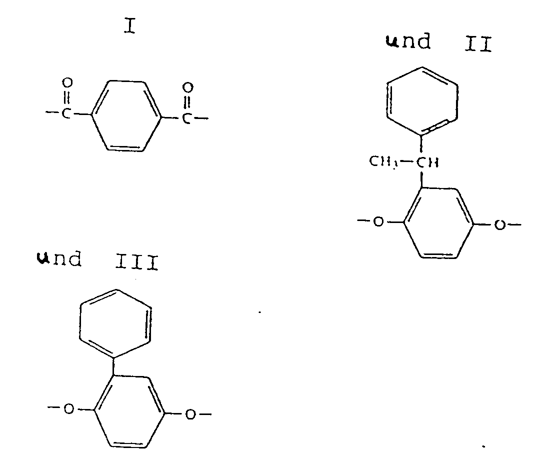 und das Erhitzen des beschichteten Metallsubstrates für eine ausreichende Dauer und auf eine ausreichende Temperatur umfaßt, um eine im wesentlichen kontiuierliche und gleichmäßige, harte, korrosionsbeständige, stark haftende Schutzbeschichtung auf dem Substrat zu bilden.

2. Verfahren nach Anspruch 1, worin nach beendetem Erhitzen das erhitzte beschichtete Substrat durch Abschrecken abgekühlt wird.

3. Verfahren nach Anspruch 2, worin das Abschrecken das Eintauchen des erhitzten beschichteten Substrates in Wasser umfaßt.

4. Verfahren nach einem oder mehreren der Ansprüche 1 bis 3, worin das Beschichten ein elektrostatisches Beschichten umfaßt.

5. Verfahren nach einem oder mehreren der Ansprüche 1 bis 4, worin das Copolymer eine Schmelzviskosität zwischen etwa 20 und etwa 50 Poise bei einer Schergeschwindigkeit von etwa 380 bis etwa 18 000 reziproken Sekunden und im Temperaturbereich von etwa 330 bis etwa 350°C hat.

6. Verfahren nach einem oder mehreren der Ansprüche 1 bis 5, worin die Schutzbeschichtung mindestens ebenso glatt ist wie diejenige, die man erhält, wenn man das feinteilige Copolymer bei einer Dicke von etwa 0,003 inches etwa 2 min auf eine Temperatur von etwa 365°C erhitzt und worin das feinteilige Material kleiner als 120 mesh ist.

7. Verfahren nach einem oder mehreren der Anspruche 1 bis 6, worin das Copolymer eine Fließspannung von weniger als etwa 0,05 psi (0,345 kPa ), z.B. von etwa 0,036 psi (0,248 kPa ) hat.

8. Verfahren nach einem oder mehreren der Ansprüche 1 bis 7, worin das Copolymer Einheit II und III in dem ungefähren Mol-Verhältnis von etwa 1:4 bis etwa 2:1, vorzugsweise von etwa 1:1, enthält.

9. Verfahren nach Anspruch 1 zur Bildung einer kontinuierlichen, gleichmäßigen Schutzbeschichtung auf einem Metallsubstrat, das das Beschichten des Substrates mit einem feinteiligen Flüssigkristallpolymer mit einer Schmelzviskosität zwischen etwa 10 und etwa 100 Poise, gemessen bei einer Schergeschwindigkeit zwischen etwa 300 bis etwa 20 000 reziproken Sekunden im Temperaturbereich von etwa 330 bis etwa 350°C, und das Erhitzen des beschichteten Substrates auf eine ausreichende Dauer und auf eine ausreichende Temperatur umfaßt, um eine stark haftende, im wesentlichen kontinuierliche und gleichmäßige, harte, korrosionsbeständige Beschichtung zu bilden.

10. Metallsubstrat, hergestellt nach einem Verfahren gemäß einem oder mehreren der Ansprüche 1 bis 9 mit einer im wesentlichen gleichmäßigen und kontinuierlichen, harten, abnutzungsbeständigen, korrosionsbeständen Beschichtung darauf, wobei die Beschichtung aus einem Copolymer gebildet ist, das in der Schmelzphase optisch anisotrop ist und die folgenden Einheiten in der Hauptkette besitzt:

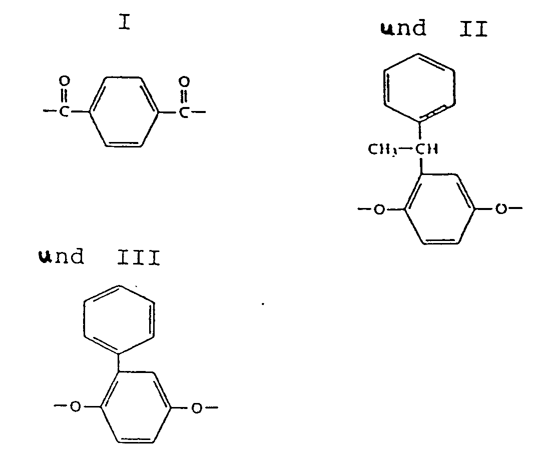

11. Beschichtetes Substrat nach einem oder mehreren der Ansprüche 1 bis 10, worin das Copolymer eine Schmelzviskosität zwischen etwa 10 und etwa 60 Poise bei einer Temperatur von etwa 330 bis etwa 350°C und bei einer Schergeschwindigkeit von etwa 300 bis etwa 20 000 reziproken Sekunden hat.

## Revendications

1. Un procédé pour former un revêtement protecteur sur des substrats métalliques comprenant le revêtement, sur ledit substrat, dudit substrat par un copolymère particulaire qui présente une anisotropie optique en phase fondue, le squelette du copolymère comprenant les deux radicaux suivants: 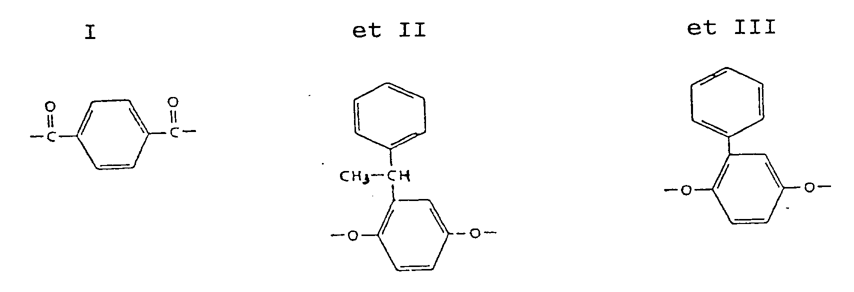 et le chauffage dudit substrat métallique revêtu pendant une durée et une température suffisantes pour former sur ledit substrat un revêtement protecteur fortement adhérent, résistant à la corrosion, continu, uniforme et dur.

2. Le procédé selon la revendication 1, dans lequel, après achèvement dudit chauffage, le substrat revêtu ainsi chauffé est refroidi par refroidissement brutal ou trempe.

3. Le procédé selon la revendication 2, dans lequel ledit refroidissement brutal consiste en l'immersion du substrat revêtu ainsi chauffé dans de l'eau.

4. Le procédé selon une ou plusieurs des revendications 1 à 3, dans lequel ledit revêtement consiste en un revêtement électrostatique.

5. Le procédé selon une ou plusieurs des revendications 1 à 4, dans lequel ledit copolymère présente une viscosité à l'état fondu comprise entre environ 20 et environ 50 poises pour une vitesse de cisaillement d'environ 380 à environ 18 000 secondes réciproques, et un domaine de température de l'ordre d'environ 330°C à environ 350°C.

6. Le procédé selon une ou plusieurs des revendications 1 à 5, dans lequel ledit revêtement protecteur est au moins aussi régulier que celui que l'on obtient par chauffage dudit copolymère particulaire lorsqu'il est appliqué en une épaisseur d'environ 0,003 inch (0,075 mm) à une température d'environ 365°C pendant environ 2 minutes et lorsque ledit matériau particulaire présente une granulométrie inférieure à 120 mesh.

7. Le procédé selon une ou plusieurs des revendications 1 à 6, dans lequel ledit copolymère présente une tension de fluage inférieure à environ 0,05 psi (0,345 kPa), par exemple de l'ordre d'environ 0,036 psi (0,248 kPa).

8. Le procédé selon une ou plusieurs des revendications 1 à 7, dans lequel ledit copolymère contient des radicaux II et III selon un rapport molaire approximatif compris entre environ 1/4 et environ 2/1, de préférence de l'ordre d'environ 1/1.

9. Le procédé selon la revendication 1, pour produire un revêtement protecteur uniforme continu sur un substrat métallique, consistant à revêtir ledit substrat d'un polymère sous forme d'un cristal liquide particulaire qui présente une viscosité à l'état fondu comprise entre environ 10 à environ 100 poises lorsqu'elle est mesurée selon une vitesse de cisaillement comprise entre environ 300 et environ 20 000 secondes réciproques dans un domaine de température compris entre environ 330°C et environ 350°C, et le chauffage dudit substrat revêtu pendant une durée et une température suffisantes pour former un revêtement résistant à la corrosion, dur, substantiellement continu et uniforme, fortement adhérent.

10. Un substrat métallique produit par un procédé selon une quelconque des revendications 1 à 9, présentant un revêtement résistant à la corrosion, résistant à l'abrasion, substantiellement uniforme et continu, dur, ledit revêtement étant formé d'un copolymère qui présente une anisotropie optique en phase fondue et dont le squelle comporte les radicaux suivants:

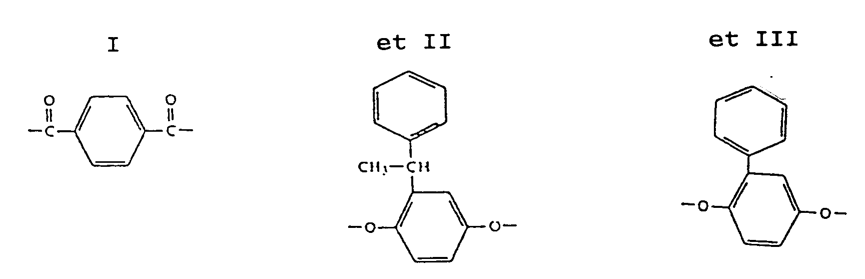

11. Le substrat revêtu selon une ou plusieurs des revendications 1 à 10, dans lequel ledit copolymère présente une viscosité à l'état fondu comprise entre environ 10 et environ 60 poises lorsqu'elle est mesurée à une température comprise entre environ 330°C et environ 350°C et pour une vitesse de cisaillement comprise entre environ 300 et environ 20 000 secondes réciproques.
